# EUROPÄISCHE PATENTSCHRIFT

(11) **EP 2 796 000 B1**
(45) Veröffentlichungstag und Bekanntmachung des Hinweises auf die Patenterteilung: **28.08.2019**
(21) Anmeldenummer: 12813322.0
(22) Anmeldetag: 19.12.2012
(51) Int. Cl.: H05B 33/08

(54) **LED-KONVERTER MIT ADAPTIVER PFC UND RESONANTEM WANDLER**
LED DRIVER WITH ADAPTIVE PFC AND RESONANT CONVERTER
CIRCUIT DE COMMANDE DE LED AVEC PFC ADAPTATIF ET CONVERTISSEUR RÉSONANT

(30) Priorität: 23.12.2011 DE 102011089872
(43) Veröffentlichungstag der Anmeldung: 29.10.2014
(73) Patentinhaber: Tridonic GmbH & Co. KG, 6851 Dornbirn (AT)
(72) Erfinder: PEREIRA, Eduardo, CH-8854 Siebnen (CH); ZIMMERMANN, Michael, CH-8888 Heiligkreuz (CH)
(74) Vertreter: Rupp, Christian
(86) Internationale Anmeldenummer: PCT/EP2012/076085
(87) Internationale Veröffentlichungsnummer: WO 2013/092662

(56) Entgegenhaltungen:
- WO-A2-2008/152565
- DE-A1-102010 031 233
- DE-A1-102010 031 239
- US-A1- 2009 316 454
- US-A1- 2011 080 102

## Beschreibung

Die vorliegende Erfindung betrifft im Allgemeinen den Betrieb von Leuchtdioden (LEDs), wobei unter Leuchtdioden anorganische Leuchtdioden, aber auch organische Leuchtdioden (OLEDs), zu verstehen sind. Folgend wird stellvertretend der Begriff LED verwendet.

Es ist bekannt, dass die Lichtabstrahlung bzw. die Helligkeit, einer LED mit dem Stromfluss durch die LED korreliert. Zur Helligkeitsregelung (Dimmen) werden LEDs daher vorzugsweise in einem Modus betrieben, in dem der Stromfluss durch die LED geregelt wird.

Grundsätzlich ist es bereits bekannt, eine LED-Strecke, die eine oder mehrere in Serie geschaltete LEDs aufweisen kann, ausgehend von einer Konstantstromquelle mit elektrischer Leistung zu versorgen. Es ist ebenfalls bekannt, zur Ausführung eines Dimmens eine Pulsweiten-Modulation (PWM) zu verwenden, so dass in den Einschaltzeitdauern eines PWM-Impulszugs eine Konstantstromregelung durchgeführt werden kann. Beim Dimmen wird dann das Tastverhältnis des PWM-Signals verändert.

Zur Bereitstellung der Versorgungsspannung der Konstantstromquelle kann beispielsweise eine aktiv getaktete PFC-Schaltung (Power Factor Correction Circuit, Leistungsfaktorkorrekturschaltung) verwendet werden.

Schließlich sind auch noch weitere Anforderungen beim Betrieb von LEDs zu beachten. Beispielsweise wird üblicherweise eine galvanische Trennung zwischen der LED-Strecke und der Versorgungsspannung des PFCs, typischerweise eine Netzspannung, gefordert.

Diese Anforderungen werden beispielsweise durch einen LED-Konverter mit getakteter Konstantstromquelle bereitgestellt, wie sie z.B. aus der DE 10 2010 031239 A1 bekannt ist. Die dort beschriebene getaktete Konstantstromquelle kann auch als Flyback-Wandler ausgeformt sein.

Es sind weiter LED-Konverter bekannt, die eine variable Last, d.h. eine verschiedene, variable Anzahl von LEDs oder LEDs verschiedener Art an der LED-Strecke, versorgen können. Insbesondere deshalb wird der Einsatz von z.B. Flyback-Wandlern bevorzugt, da diese Art an Wandler relativ flexibel eingestellt werden können und mit ihnen gut auf eine Änderung der durch den LED-Konverter betriebenen Last reagiert werden kann (verursacht beispielsweise durch ein Hinzufügen oder ein Entfernen von LEDs und/oder durch eine Temperaturänderung).

Dabei kann beispielsweise die Anzahl von LEDs zwischen 1 und 16 variieren. Somit muss der LED-Konverter beispielsweise in der Lage sein, für eine (einzige) LED beispielsweise eine Ausgangsspannung von 3 Volt bereitzustellen, während er für beispielsweise 16 in Serie geschaltete LEDs eine Ausgangsspannung von 48 Volt bereitstellen muss.

Insbesondere bei der Verwendung eines Flyback-Wandlers ist die Menge der durch ihn übertragbaren Energie jedoch begrenzt, da die Bauteile, insbesondere die primärseitige Wicklung, nicht unbegrenzt vergrößert werden kann.

Ein weiteres Problem des Flyback-Wandlers ist, dass primärseitig eine Steuerschaltung für die Steuerung bzw. die Regelung des Schalters des Flyback-Wandlers vorgesehen ist. Damit die Steuerschaltung die Steuerung bzw. Regelung durchführen kann, erfolgt typischerweise eine Messsignal-Rückführung von der Sekundärseite des Flyback-Wandlers zu der Steuerschaltung (Feedback), wobei zur Beibehaltung der galvanischen Trennung diese Rückführung ebenfalls galvanisch getrennt erfolgen muss.

Um dies zu erreichen wird beispielsweise ein Optokoppler eingesetzt, der es erlaubt, das Messsignal galvanisch getrennt zurückzuführen. Der Einsatz eines Optokopplers verursacht jedoch relativ hohe Kosten im Verhältnis zu den Gesamtkosten der Schaltung. Weiterhin sind die Lebensdauer und auch die zeitliche Beständigkeit des Optokopplers begrenzt.

Seit langem sind weiterhin resonante Wandler (Resonanzwandler) beispielsweise aus dem Bereich der Vorschaltgeräte für Leuchtstofflampen bekannt. Dort werden resonante Wandler z.B. eingesetzt, um eine für den Betrieb einer Leuchtstofflampe notwendige hohe Spannung zu erzeugen.

Beim resonanten Wandler (engl. "LLC resonant converter") handelt es sich insbesondere um eine Form eines Gleichspannungswandlers, der zur Energieübertragung mit einem Schwingkreis arbeitet. Der resonante Wandler wandelt dabei eine Gleichspannung in eine ein- oder mehrphasige Wechselspannung um und wird für einen optimalen Betrieb typischerweise mit annähernd konstanter Last betrieben. Resonante Wandler arbeiten bei konstantem Betrieb (d. h. bei einem Betrieb mit konstanter Last) an einem vordefinierten Frequenz-Arbeitspunkt auf der Resonanzkurve.

Nachteilig ist indessen, dass sich bei einer Laständerung durch Veränderung der LED-Strecke (andere LEDs bzw. eine andere Anzahl von LEDs in der Serienschaltung der LEDs) auch der Frequenz-Arbeitspunkt auf einer Resonanzkurve verschiebt und der resonante Wandler damit nicht mehr optimal arbeitet.

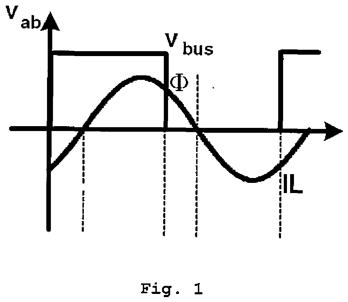

Dies bedeutet jedoch, dass sich nicht nur die Spannungsüberhöhung ("voltage gain"), d.h. das Verhältnis von Busspannung zu Ausgangsspannung, verändert, sondern auch, dass sich der Phasenwinkel Φ (Winkel zwischen Strom IL und Spannung V_{bus}, wie in Fig. 1 veranschaulicht) verändert.

Somit kann es zu einem reaktiven Bereich, d. h. zu einer durch eine Phasenverschiebung verursachte Erhöhung des Blindstroms kommen, bei dem der Wirkungsgrad des resonanten Wandlers abnimmt.

Somit wird der Frequenz-Arbeitspunkt für den resonanten Wandler bei Verwendung von z.B. 16 LEDs sehr viel näher an einem Resonanzpeak liegen als bei der Verwendung von nur einer LED, bei der der Frequenz-Arbeitspunkt stark nach oben, d. h. weg von dem Resonanzpeak, verschoben ist. Somit wird der Wirkungsgrad beim Betrieb mit einer LED deutlich verringert sein.

Das Dokument US 2011/080102 A1 beschreibt ein System mit einem DC/DC Konverter, dessen Eingangsspannung eine von einer PFC-Schaltung erzeugte Bus-Spannung ist und dessen Ausgangsspannung an einer LED-Strecke anliegt. In einem Ausführungsbeispiel weist der DC/DC Konverter eine LLC-Resonanzschaltung auf. Die Ausgangsspannung wird als Feedback-Signal derart verwendet, dass die Bus-Spannung mit der Ausgangsspannung verändert wird.

Das Dokument DE 10 2010 031 233 A1 offenbart ein System mit einem Buck-Konverter als Schaltregler, wobei über die Einschaltzeit, der LED-Strom geregelt wird. Dieser Schaltregler wird jedoch nicht resonant betrieben, sondern über die Änderung von Ein-zu-Ausschaltzeit.

Daraus ergibt sich, dass über die Änderung des Tastverhältnisses, der LED-Strom als Regelgröße geändert wird.

Das Dokument WO 2008/152565 offenbart einen Konverter zum Betreiben einer LED-Strecke. Der Konverter basiert auf einer H-Brücke aufweisend vier Schalter T1-T4. Der Resonanzkreis weist einen Kondensator C und eine Induktivität L auf und wird von der H-Brücke mit Spannung versorgt.

Die Erfindung stellt sich daher die Aufgabe, einen LED-Konverter bereitzustellen, der mit einem resonanten Wandler ausgeführt ist und der einen variablen und flexiblen Betrieb bei sich verändernder Last erlaubt. Gleichzeitig soll die galvanisch getrennt erfolgende Signalrückführung entfallen.

Die Erfindung löst dieses Problem mit einer Vorrichtung, einem Verfahren und einer integrierten Schaltung nach den unabhängigen Ansprüchen. Weitere vorteilhafte Ausgestaltungen der Erfindung sind Gegenstand der abhängigen Ansprüche.

Ein LED-Konverter zum Betrieb einer Last aus wenigstens einer LED-Strecke mit wenigstens einer LED, vorzugsweise mit mehreren LEDs wird bereitgestellt, wobei der LED-Konverter primärseitig einen mit einer Gleichspannung versorgten resonanten Wandler umfasst, der eine mit zwei wechselseitig getakteten Schaltern ausgebildete Halbbrücke aufweist, die über einen an ihrem Mittenpunkt angeschlossenen Serien/Parallel-Resonanzkreis eine Versorgungsspannung für die LED-Strecke bereitstellt, wobei der LED-Konverter eine Steuereinheit aufweist, die dazu eingerichtet ist, die Frequenz der Taktung der Halbbrücke einzustellen, und wobei die Steuereinheit dazu eingerichtet ist, zur Steuerung oder Regelung der durch den LED-Konverter an die LED-Strecke übertragenen Leistung die Frequenz der Taktung in einem wenigstens einseitig begrenzten Frequenzkorridor zu verändern, und die Amplitude der den resonanten Wandler versorgende Gleichspannung zu verändern, wenn eine Änderung der Last und/oder die Veränderung eines Sollwerts für die Leistung zu einem Frequenz-Arbeitspunkt außerhalb des Frequenzkorridors führen würde.

Die Steuereinheit kann eine Rückführgröße, insbesondere einen Istwert, in dem resonanten Wandler ermitteln und die Frequenz der Taktung basierend auf der Rückführgröße einstellen, wobei die Rückführgröße eine Größe sein kann, die die durch den resonanten Wandler übertragene Leistung wiedergibt. Die Rückführgröße kann insbesondere ein Strom/eine Spannung in dem resonanten Wandler sein oder ein ihn/sie wiedergebender elektrischer Parameter.

Die Steuereinheit kann beim Einschalten des LED-Konverters, insbesondere beim Anlegen einer Netzspannung, die Frequenz der Taktung so einstellen, dass der Frequenz-Arbeitspunkt in dem Frequenzkorridor liegt. Ob der Frequenz-Arbeitspunkt in dem Frequenzkorridor liegt kann über die Rückführgröße ermittelt werden. Die Steuereinheit kann gleichzeitig die den resonanten Wandler versorgende Gleichspannung auf eine möglichst geringe Gleichspannung, insbesondere mit kleiner Amplitude, einstellen.

Die Steuereinheit kann die den resonanten Wandler versorgende Gleichspannung graduell erhöhen, bis ein Schwellwert für die Rückführgröße erreicht ist.

Die Steuereinheit kann die den resonanten Wandler versorgende Gleichspannung konstant halten, wenn der Schwellwert erreicht wurde.

Die Steuereinheit kann eine Laufzeitsteuerung durchführen und während der Laufzeitsteuerung die die Rückführgröße ermitteln. Die Steuereinheit kann basierend auf der die Rückführgröße erkennen, ob der Frequenz-Arbeitspunkt in dem Frequenzkorridor liegt.

Die Steuereinheit kann die den resonanten Wandler versorgende Gleichspannung anpassen, wenn die Überprüfung der Rückführgröße während der Laufzeitsteuerung ergibt, dass der Frequenz-Arbeitspunkt außerhalb des Frequenzkorridors liegt und/oder aus ihm führen würde.

Die Steuereinheit kann die Laufzeitsteuerung nach Erreichen des Schwellwerts durchführen.

Die Steuereinheit kann die den resonanten Wandler versorgende Gleichspannung durch eine Ansteuerung eines Schalters einer PFC-Schaltung einstellen.

Die Steuereinheit kann einen Sollwert für die den resonanten Wandler versorgende Gleichspannung an eine PFC-Schaltung übermitteln.

Eine Änderung der Last kann aus einer Änderung der Anzahl und/oder der Art der betriebenen LEDs der LED-Strecke und oder aus einer Temperaturänderung resultieren.

Der Serien/Parallel-Resonanzkreis kann einen Transformator versorgen, der an seinem Ausgang sekundärseitig die Versorgungsspannung für die LED-Strecke bereitstellt.

Sekundärseitig, vorzugsweise an einem Ausgang des Transformators, kann eine Diodenschaltung vorgesehen sein, die einen Speicherkondensator speist, der die Versorgungsspannung für die LED-Strecke bereitstellt.

In einem weiteren Aspekt wird ein Verfahren zum Betrieb eines LED-Konverters zum Betrieb einer Last aus wenigstens einer LED-Strecke mit wenigstens einer LED, vorzugsweise mit mehreren LEDs bereitgestellt, wobei der LED-Konverter primärseitig einen mit einer Gleichspannung versorgten resonanten Wandler umfasst, der eine mit zwei wechselseitig getakteten Schaltern ausgebildete Halbbrücke aufweist, die über einen an ihrem Mittenpunkt angeschlossenen Serien/Parallel-Resonanzkreis eine Versorgungsspannung für die LED-Strecke bereitstellt, wobei der LED-Konverter eine Steuereinheit aufweist, die die Frequenz der Taktung der Halbbrücke einstellt, und wobei die Steuereinheit zur Steuerung oder Regelung der durch den LED-Konverter an die LED-Strecke übertragenen Leistung die Frequenz der Taktung in einem wenigstens einseitig begrenzten Frequenzkorridor verändert, und die Amplitude der den resonanten Wandler versorgende Gleichspannung verändert, wenn eine Änderung der Last und/oder die Veränderung eines Sollwerts für die Leistung zu einem Frequenz-Arbeitspunkt außerhalb des Frequenzkorridors führen würde.

Schließlich wird in einem noch weiteren Aspekt eine Integrierte Schaltung, vorzugsweise einen Microcontroller und/oder ASIC oder eine Kombination daraus, bereitgestellt, die zur Durchführung eines Verfahrens, wie es oben beschrieben wurde, ausgeführt und/oder programmiert ist.

Die Erfindung wird nun im Folgenden auch mit Blick auf die Zeichnungen beschrieben.

Es zeigen:
- Fig. 1: schematisch einen Zusammenhang zwischen einer Busspannung, einem LED-Strom und einem Phasenwinkel.
- Fig. 2: ein Blockschaltdiagramm eines LED-Konverters gemäß der Erfindung.
- Fig. 3: schematisch ein Ausführungsbeispiel für einen LED-Konverter gemäß der Erfindung.
- Fig. 4: ein Flussdiagramm für eine Startsequenz, wie sie erfindungsgemäß durch eine Steuereinheit ausgeführt wird.
- Fig. 5: schematisch einen Zusammenhang zwischen Abtastung einer Rückführgröße in dem resonanten Wandler und einer Veränderung der Netzspannung und einer Frequenz der Taktung der Halbbrücke des resonanten Wandlers.
- Fig. 6: ein Flussdiagramm für eine Laufzeitsteuerung/-regelung, wie sie erfindungsgemäß durch eine Steuereinheit ausgeführt wird.
- Fig. 7: schematisch ein erfindungsgemäßes Verfahren zur Ermittlung eines Spitzenwertes für die Rückführgröße.

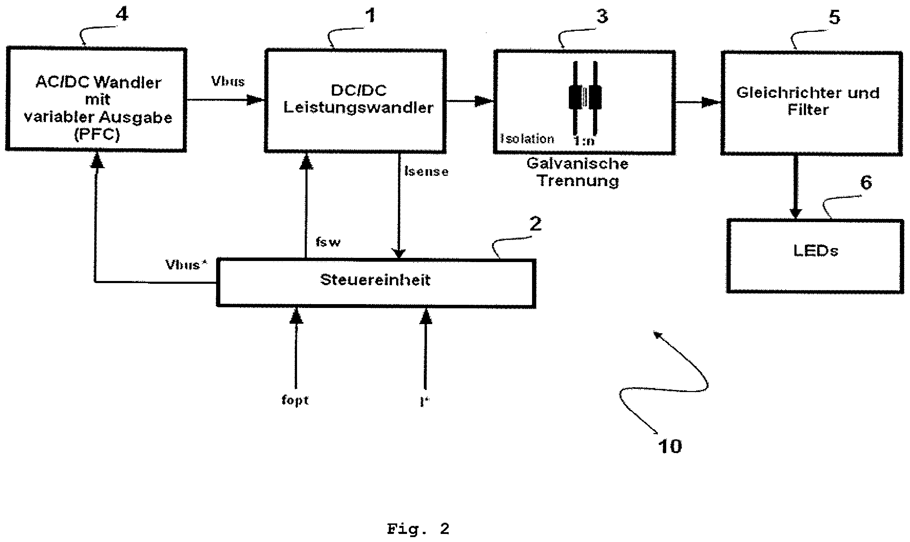

Die Erfindung wird nun zunächst mit Blick auf Fig. 2 beschrieben, die ein Blockschaltdiagramm für einen erfindungsgemäßen LED-Konverter 10 zeigt. Die Erfindung löst das oben genannte Problem insbesondere dadurch, dass der Frequenz-Arbeitspunkt des resonanten Wandlers 1 auf der Resonanzkurve auf einen Bereich, insbesondere einen zumindest einseitig begrenzten Frequenzkorridor fₒₚₜ, beschränkt wird, in dem der Wirkungsgrad des resonanten Wandlers hoch ist. Dieser Frequenzkorridor fₒₚₜ ist in einer Steuereinheit 2 vorab, vorzugsweise werksseitig, abgelegt.

Gemäß einem Ausführungsbeispiel sind daher innerhalb dieses Frequenzkorridors fₒₚₜ Veränderungen der Arbeitsfrequenz des resonanten Wandlers 1 möglich. Die Frequenz f_{sw}, mit der der resonanten Wandler 1 arbeitet bzw. betrieben wird, ist also nicht vollständig fest. Dadurch kann eine ausreichende Adaptivität des resonanten Wandlers 1 auf unterschiedliche Lasten (beispielsweise unterschiedliche Arten und/oder unterschiedliche Anzahlen von LEDs) an einer LED-Strecke 6 erlaubt werden.

Um diese Adaptivität des resonanten Wandlers 1 zu ermöglichen, wird zur Anpassung an die Last die den resonanten Wandler 1 versorgende Gleichspannung bzw. die Busspannung V_{bus} (DC-Spannung) verändert, wenn sich der Frequenz-Arbeitspunkt aus den Grenzen des Frequenzkorridors bewegt, d. h. wenn die Arbeitsfrequenz des resonanten Wandlers 1 auf Grund eines Abgleichs mit der Rückführgröße außerhalb des zumindest einseitig begrenzten Frequenzkorridors liegen würde.

Gemäß der Erfindung ist daher die Steuereinheit 2 dazu eingerichtet, die geregelte/gesteuerte Arbeitsfrequenz für den resonanten Wandler zu regeln/steuern. Vorzugsweise erfasst die Steuereinheit 2 dabei als Rückführgröße den Strom Iₛₑₙₛₑ durch den resonanten Wandler 1. Dies ist schematisch in Fig. 2 gezeigt. In Fig. 2 ist zudem eine galvanische Trennung 3 nach dem resonanten Wandler 1 gezeigt. Die Steuereinheit 2 stellt und/oder regelt weiterhin die Busspannung V_{bus}, beispielsweise mittels eines Ansteuersignals V_{bus*} für einen AC/DC-Wandler mit variabler Ausgabe, bzw. für einen Schalter der PFC-Schaltung 4.

Es ist selbstverständlich auch möglich, dass die Steuereinheit 2 der PFC-Schaltung 4 einen Sollwert vorgibt, auf den hin die PFC-Schaltung 4 die Busspannung/Gleichspannung V_{bus} einstellt. Dies ist insbesondere dann der Fall, wenn die Busspannung V_{bus} nicht an die Steuereinheit 2 zurückgeführt wird, sondern bereits in der PFC-Schaltung 4 selbst eine Regelung für die Busspannung V_{bus} vorgesehen ist.

Der Steuereinheit 2 kann neben dem Frequenzkorridor fₒₚₜ dabei auch ein Dimm-Sollwert I* oder alternativ oder zusätzlich gegebenenfalls auch ein fester Arbeitspunkt für eine Arbeitsfrequenz des resonanten Wandlers 1 vorgegeben werden.

Wenn nunmehr ein Dimm-Signal I* eingeht, bei dem die Steuereinheit 2 eine Arbeitsfrequenz des resonanten Wandlers 1 einstellen müsste, die außerhalb des vorgegebenen optimalen Frequenzkorridors fₒₚₜ liegt, wird die Steuereinheit 2 den Sollwert V_{bus*} für die PFC-Schaltung 4 (beispielsweise ein aktiv getakteter PFC) verändern, so dass die den resonanten Wandler 1 versorgende Busspannung V_{bus} verändert, insbesondere verringert wird.

Die Steuereinheit 2 steuert/regelt dabei insbesondere die Frequenz f_{sw} für die Taktung einer Halbbrücke des resonanten Wandlers 1, um die Arbeitsfrequenz des resonanten Wandlers 1 einzustellen.

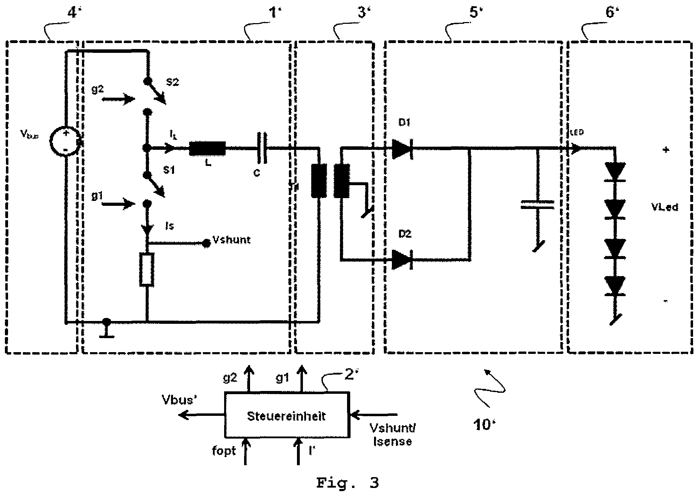

Mit Blick auf Fig. 3 erfolgt nun eine Beschreibung eines Ausführungsbeispiels für eine Schaltungsanordnung für einen LED-Konverter 10'gemäß der Erfindung.

Neben der Busspannung V_{bus} (Block 4') zeigt die Fig. 3 einen resonanten Wandler 1', der eine mit zwei wechselseitig getakteten Schaltern S1, S2 ausgebildete Halbbrücke aufweist, die mit der Busspannung V_{bus} versorgt ist. Die Schalter S1, S2 sind insbesondere Feldeffekttransistoren (FETs), z.B. MOSFETS. Die Schalter S1, S2 werden dabei von einer Steuereinheit 2' über jeweils einen Gate-Anschluss g1, g2 angesteuert.

Am Mittelpunkt der Halbbrücke schließt sich ein Serienresonanzkreis (alternativ ein Parallelresonanzkreis) aus einer Induktivität L und einer Kapazität C an, wobei dieser Serienresonanzkreis wiederum einen Überträger 3' (Transformator T1 zur galvanischen Trennung) versorgt.

An dem Ausgang des Überträgers ist sekundärseitig eine Diodenschaltung gezeigt, die einen Speicherkondensator (ELCO) speist. Diese Anordnung entspricht dem Block "Gleichrichter und Filter" 5 aus Fig. 2. Die Gleichspannung (DC-Spannung) an dem Speicherkondensator versorgt wiederum eine LED-Strecke 6'.

Die Schalter S1 und S2 werden dabei idealer Weise von der Steuereinheit 2' so angesteuert, dass sie abwechselnd für die Dauer einer halben Periode der Resonanzfrequenz der Induktivität L und der Kapazität C durchgeschaltet sind.

Dazu erzeugt die Steuereinheit 2' vorzugsweise zwei Rechteckspannungen mit jeweils einer Einschaltdauer, z.B. von 45%, wobei darauf zu achten ist, dass keine Überlappungen vorliegen dürfen. Um den resonanten Wandler zu regeln, muss daher von der Steuereinheit 2' nur die jeweilige Frequenz f_{sw} zur Ansteuerung der Schalter S1, S2 geregelt werden, bzw. die Totzeit entsprechend verlängert oder verkürzt werden.

Bei Volllast haben die Schalter S1, S2 daher lediglich eine kleine Totzeit und werden im Gegentakt vorzugsweise mit der Resonanzfrequenz des Serienresonanzkreises angesteuert.

Dementsprechend stellt sich an dem Speicherkondensator ein fast sinusförmiger Spannungsverlauf ein. Die primärseitige Spannung kann dabei etwa die Hälfte der Busspannung V_{bus} betragen. Da die Schalter S1, S2 jeweils für die Dauer einer halben Periode vorzugsweise der Resonanzfrequenz des Serienresonanzkreises eingeschaltet werden können, befindet sich der Strom im Resonanzkreis beim Ein- und Ausschalten immer z.B. gerade im Nulldurchgang, was zu geringen Schaltverlusten führt.

Soll die Leistung des resonanten Wandlers reduziert werden, so kann die Schaltfrequenz bei konstanter Einschaltdauer reduziert werden. Im Prinzip befindet sich der Serienresonanzkreis dann z.B. immer noch in Resonanz, allerdings wird dann die Schwingung für die Dauer der Totzeit, in der beide Schalter S1, S2 sperren, erhalten und dann am Ende der Totzeit an gleicher Stelle fortgesetzt.

Der Spannungsverlauf an dem Speicherkondensator kann daher für die Dauer der Totzeit im Scheitelwert quasi eingefroren werden, wobei der Speicherkondensator die Ladung bis zum Ende der Totzeit speichern kann. Die Schaltfrequenz des resonanten Wandlers kann dann bei geringer Last z.B. bis auf 0 Hz reduziert werden.

Zurückkehrend zu Fig. 2 ist die Steuereinheit 2 also insbesondere dazu eingerichtet, ein Regelverfahren/eine Steuerung für die Frequenz f_{sw} des resonanten Wandlers 2 und der Busspannung V_{bus} durchzuführen, wie sie im Folgenden beschrieben wird.

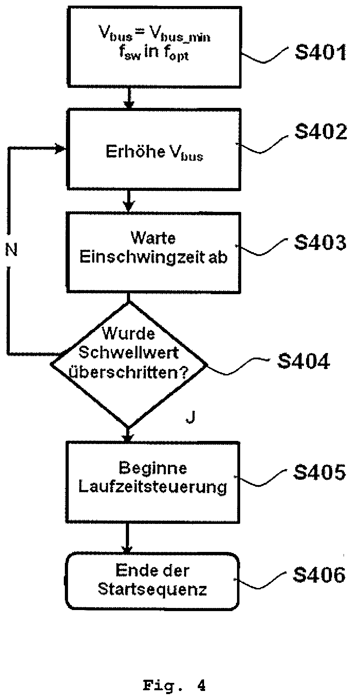

Dabei wird nun auch Bezug auf Figs. 1 und 4 genommen, die einen Teil des erfindungsgemäßen Verfahrens beschreibt.

Da bei einem Einschalten des LED-Konverters 10 noch nicht bekannt ist, wie groß die Last an der LED-Strecke 6 ist, insbesondere also nicht bekannt ist, welche Art und/oder welche Anzahl von LEDs angeschlossen ist, führt die Steuereinheit 2 zunächst eine Startsequenz aus.

In der Startsequenz (Schritt S401) wird demnach der resonante Wandler 1 von der Steuereinheit 2 zunächst mit einer Frequenz f_{sw} so betrieben, dass der Frequenz-Arbeitspunkt in dem vorbestimmten Frequenzkorridor fₒₚₜ, insbesondere an einem bestimmten Arbeitspunkt auf der Resonanzkurve, liegt. Dabei wird die Busspannung V_{bus}, die den resonanten Wandler 1 versorgt, möglichst gering gehalten.

Ausgehend von dem Minimalwert für die Busspannung wird im Folgenden die Busspannung V_{bus} graduell erhöht (Schritte S402 bis S404), während gleichzeitig die Rückführgröße, z.B. der Strom Iₛₑₙₛₑ, gemessen und/oder von der Steuereinheit 2 erfasst wird.

Die Rückführgröße wird vorzugsweise an einem Shunt zwischen Masse und dem potentialniedrigen Schalter (der Schalter S1 in Fig. 3) der Halbbrücke des resonanten Wandlers 1 bestimmt. Alternativ oder zusätzlich kann auch eine Spannung Vₛₕᵤₙₜ von der Steuereinheit 2 als Rückführgröße an dem Shunt erfasst werden.

Zwischen einer Veränderung der Busspannung V_{bus} und einer erneuten Überprüfung bzw. einem erneuten Abtasten der Rückführgröße kann zunächst eine Einschwingzeit abgewartet werden (Schritt S403).

Wenn die Rückführgröße (beispielsweise ein Spitzenwert *Max* des Stroms durch den potential niedrigeren Schalter der Halbbrücke, allgemein einen Spitzenwert *Max* für die Rückführgröße die für den resonanten Wandler 1 erfasst wird) einen Sollwert *ref* erreicht (Schritt S404), wird die Busspannung nicht mehr weiter erhöht. Die Steuereinheit 2 wechselt dann in einen Modus zur Laufzeitsteuerung des resonanten Wandlers (Schritt S405) und die Startsequenz ist damit beendet (Schritt S406). Andernfalls kehrt das Verfahren zu Schritt S402 zurück und erhöht die Busspannung V_{bus} erneut.

Die Busspannung wird natürlich nur solange festgehalten, wie die Frequenz f_{sw} des resonanten Wandlers innerhalb des Frequenzkorridors fₒₚₜ liegt.

Bevorzugt wird die Startsequenz jedes Mal durchlaufen, wenn die Netzspannung neu an den LED-Konverter 10 angelegt wird.

Die Rückführgröße, die wie gesagt beispielsweise ein Spitzenwert Max für die Rückführgröße an dem Shunt ist, ist hierbei nur ein Beispiel für eine mögliche Größe, die die durch den resonanten Wandler 1 übertragene Leistung wiedergibt. Aus dieser Rückführgröße kann auch auf den momentanen Arbeitspunkt geschlossen werden und entsprechend die Frequenz f_{sw} durch die Steuereinheit 2 eingestellt werden.

Alternativ können auch andere primärseitige oder sekundärseitig erfasste Rückführgrößen verwendet werden. Wie bereits beschrieben, ist bei der Rückführung von sekundärseitigen Rückführgrößen eine zusätzliche galvanische Trennung, beispielsweise mittels eines Optokopplers notwendig, was, wie oben bereits erwähnt, zu erhöhten Kosten für die Schaltung führt, und daher vorliegend nicht bevorzugt wird.

Beispielsweise könnte der erlaubte Arbeitspunktbereich, bzw. der wenigstens einseitig begrenzte Frequenzkorridor fₒₚₜ, bei einer Arbeitsfrequenz von beispielsweise 80 kHz für die primärseitige Taktung des resonanten Wandlers 1 in einem Bereich von 80 kHz ± 10 kHz liegen. Der Bereich kann jedoch auch ca. ± 20 %, vorzugsweise ± 15 %, um eine optimale Arbeitsfrequenz betragen, und den zumindest einseitigen Frequenzkorridor fₒₚₜ bestimmen.

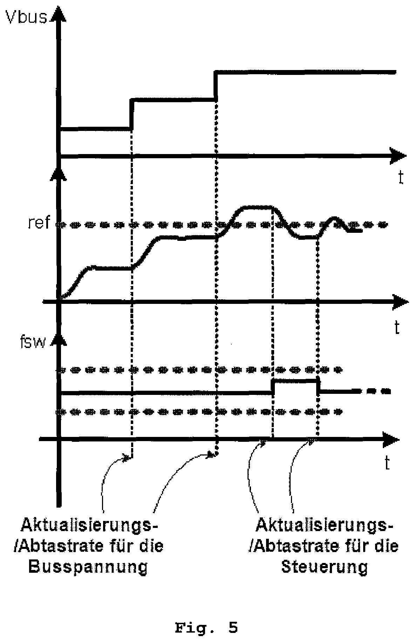

Die Auswirkungen der Startsequenz auf verschiedene Größen des LED-Konverters 10 sind in Fig. 5 schematisch gezeigt. Dabei ist in Fig. 5 oben der Verlauf der Busspannung V_{bus} gezeigt, während in Fig. 5 in der Mitte Werte für die von der Steuereinheit 2 erfasste Rückführgröße aufgetragen sind und ebenfalls der Schwellwert *ref* dargestellt ist (gestrichelte Linie).

Wenn der Schwellwert *ref* für die Rückführgröße durch graduelle Erhöhung der Busspannung V_{bus} überschritten wurde, so kann wie in Fig. 5 unten gezeigt, kurzzeitig die Frequenz f_{sw} für die Taktung der Schalter der Halbbrücke kurzzeitig erhöht werden, bis die erfasste Rückführgröße wieder unterhalb des Schwellwerts *ref* liegt.

In Fig. 5 ist dazu eine Abtastrate einerseits für die Rückführgröße, auf deren Basis die Busspannung V_{bus} angepasst wird, und andererseits die Abtastrate der Rückführgröße gezeigt, auf deren Basis die Frequenz f_{sw} für die Taktung der Schalter der Halbbrücke des resonanten Wandlers 1 erfolgt, um den Frequenz-Arbeitspunkt innerhalb des Frequenzkorridors fₒₚₜ zu halten. Der Frequenzkorridor fₒₚₜ ist in Fig. 5 unten durch gestrichelte Linien kenntlich gemacht.

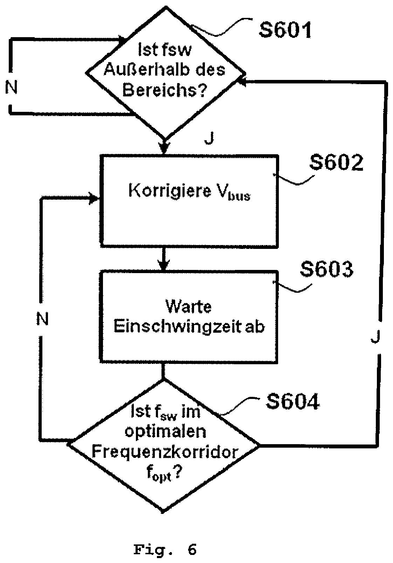

Das erfindungsgemäße Verfahren zur Laufzeitsteuerung/- regelung ist in Fig. 6 gezeigt. Dabei wird kontinuierlich geprüft, die Frequenz f_{sw} für die Taktung der Schalter der Halbbrücke des resonanten Wandlers 2 außerhalb des Frequenzkorridors fₒₚₜ liegt (Schritt S601), d.h. ob die Frequenz f_{sw} auf Grund der erfassten Rückführgröße verändert werden muss, um den Frequenz-Arbeitspunkt in dem Frequenzkorridor zu halten.

Liegt die Frequenz f_{sw} ausserhalb des Bereichs, so wird die Busspannung V_{bus} korrigiert (siehe Schritt S602). Nach möglichem Abwarten einer Einschwingzeit (Schritt S603) wird wiederum geprüft, ob durch die Frequenz f_{sw} für die Taktung der Schalter der Halbbrücke ein Betrieb in dem optimalen Frequenzkorridor fₒₚₜ (Frequenzband) erfolgt (Schritt S604). Liegt die Frequenz f_{sw} für die Taktung der Schalter, und damit der Frequenz-Arbeitspunkt, in dem Frequenzkorridor fₒₚₜ, so kehrt die Steuereinheit 2 in den Modus zur Laufzeitkorrektur zurück (Schritt S601).

Liegt die Frequenz f_{sw} für die Taktung der Schalter des resonanten Wandlers 1 außerhalb des Frequenzkorridors fₒₚₜ, so kehrt die Steuereinheit zu Schritt S602 zurück, in dem die Busspannung V_{bus} korrigiert wird. Folglich regelt/steuert die Laufzeitsteuerung die Busspannung V_{bus}, so dass die Arbeitsfrequenz f_{sw} für die Taktung der Schalter des resonanten Wandlers 1 innerhalb des Frequenzkorridors fₒₚₜ gehalten wird.

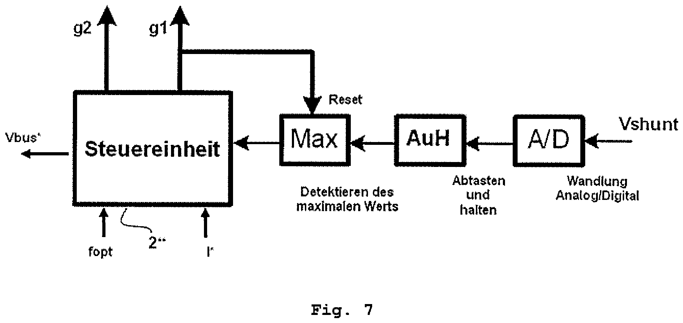

Eine Steuereinheit 2" kann insbesondere einen Spitzenwert Max (Peak-Value) für die Rückführgröße erfassen. Dies wird nun mit Blick auf Fig. 7 beschrieben.

Dazu wird die Rückführgröße (Spannung/Strom am Messwiderstand/Shunt) zunächst durch einen Analog-/Digitalwandler (A/D-Wandler) digitalisiert. Anschließend wird die Rückführgröße, z.B. die Spannung Vₛₕᵤₙₜ, abgetastet (sampling) und der jeweils höhere Abtastwert gespeichert (gehalten) . Dies ist auch als "Sample and Hold" ("Abtasten und halten", in Fig. 7) bekannt.

Synchron zur Schaltung des potential niedrigeren Schalters der Halbbrücke des resonanten Wandlers 1 (Schalter S1 in Fig. 3) wird der bisher erfasste Spitzenwert Max für die Rückführgröße durch die Steuereinheit 2" zurückgesetzt (Reset). Somit erfolgt eine Spitzenwerterfassung (Peak-Value) für die Rückführgröße für jede Einschaltzeitdauer des potential niedrigeren Schalters der Halbbrücke.

Diese Art der Stromerfassung kann weiter auch für eine Fehlererfassung auf der Sekundärseite ausgewertet werden (beispielsweise zur Erfassung eines Kurzschlusszustands).

Bei einem solchen Fehlerzustand verändert sich der Wert für die Rückführgröße unzulässig, z.B. steigt/fällt über/unter einen Grenzwert. Beispielsweise kann der primärseitig erfasste Strom Iₛₑₙₛₑ unzulässig hoch ansteigen.

Wird ein solcher Fehlerzustand erkannt, so kann die Steuereinheit 2, 2', 2" Maßnahmen ergreifen, um eine Zerstörung des resonanten Wandlers 1, 1' zu verhindern. Diese Maßnahmen können beispielsweise in einer Veränderung der Taktung bzw. des Tastverhältnisses der Halbbrücke bestehen, und/oder die Frequenz f_{sw} der Halbbrücke kann verändert werden, um die übertragene Leistung zu reduzieren. Alternativ oder zusätzlich ist zudem eine komplette Abschaltung des LED-Konverters 10, 10' durch die Steuereinheit 2, 2', 2" möglich.

Vorteil der Erfassung des Spitzenwertes Max ist, dass die Steuereinheit 2, 2', 2" die Busspannung V_{bus} basierend auf dem aktuellen Spitzenwert für die Rückführgröße direkt verändern, ohne dass eine Integration oder Mittelung durch die Steuereinheit 2, 2', 2" erfolgen muss, und auch direkt auf die durch den resonanten Wandler übertragene Leistung zurückschließen kann.

Wichtig ist indessen, dass vorzugsweise dieser Spitzenwert Max ohne weitere Kombination mit anderen elektrischen Größen, insbesondere ohne beispielsweise Multiplikation mit der Busspannung V_{bus}, als Rückführgröße für die Steuerung/Regelung der durch den resonanten Wandler 1, 1' übertragenen Leistung verwendet wird. Steuergröße ist wie gesagt z.B. die Schaltfrequenz der Schalter der Halbbrücke des resonanten Wandlers.

Es ist dabei zu verstehen, dass die oben beschriebenen Verfahren und Verfahrensschritte auch durch eine integrierte Schaltung, insbesondere durch einen Mikrokontroller oder eine ASIC oder eine Kombination aus beiden ausgeführt werden kann/können.

Die Erfindung kann daher einen LED-Konverter zum Betrieb einer Last aus wenigstens einer LED-Strecke mit wenigstens einer LED, vorzugsweise mit mehreren LEDs bereitstellen, wobei der LED-Konverter primärseitig einen mit einer Gleichspannung versorgten resonanten Wandler umfasst, der eine mit zwei wechselseitig getakteten Schaltern ausgebildete Halbbrücke aufweist, die über einen an ihrem Mittenpunkt angeschlossenen Serien/Parallel-Resonanzkreis eine Versorgungsspannung für die LED-Strecke bereitstellt, wobei eine Steuereinheit dazu eingerichtet ist, zur Regelung der durch den LED-Konverter an die LED-Strecke übertragenen Leistung als zurückgeführte Istwert-Grösse in jedem Einschaltzyklus einen Spitzenwert des Stroms durch den potentialniedrigeren Schalter der Halbbrücke direkt oder indirekt zu ermitteln und als Steuergrösse die Taktung, also die Frequenz und/oder das Tastverhältnis, der Halbbrücke einzustellen.

Die Steuereinheit kann den Spitzenwert durch Abtasten einer Spannung/eines Stroms an einem Messwiderstand ermitteln. Die Steuereinheit kann einen jeweils durch das Abtasten erfassten höheren Wert, den momentanen Spitzenwert, speichern.

Die Steuereinheit kann einen gespeicherten Wert synchronisiert zu der Schaltung des potentialniedrigeren Schalters der Halbbrücke zurückzusetzen.

Die Steuereinheit kann einen sekundärseitigen Fehlerzustand, insbesondere einen Kurzschluss, erkennen, wenn der erfasste Spitzenwert einen Schwellwert erreicht.

Die Steuereinheit kann bei Erkennung eines Fehlerzustandes die Frequenz der Taktung und/oder ein Tastverhältnis der Halbbrücke verändern, und dadurch die übertragene Leistung zu verringern, und/oder kann den LED-Konverter abschalten.

In einem weiteren Aspekt kann die Erfindung ein Verfahren zum Betrieb eines LED-Konverters zum Betrieb einer Last aus wenigstens einer LED-Strecke mit wenigstens einer LED, vorzugsweise mit mehreren LEDs bereitstellen, wobei der LED-Konverter primärseitig einen mit einer Gleichspannung versorgten resonanten Wandler umfasst, der eine mit zwei wechselseitig getakteten Schaltern ausgebildete Halbbrücke aufweist, die über einen an ihrem Mittenpunkt angeschlossenen Serien/Parallel-Resonanzkreis eine Versorgungsspannung für die LED-Strecke bereitstellt, wobei eine Steuereinheit zur Regelung der durch den LED-Konverter an die LED-Strecke übertragenen Leistung als zurückgeführte Istwertgröße in jedem Einschaltzyklus des potentialniedrigeren Schalters den Spitzenwert des Stroms durch den potentialniedrigeren Schalter der Halbbrücke direkt oder indirekt ermittelt und als Steuergrösse die Taktung, also die Frequenz und/oder das Tastverhältnis, der Halbbrücke einstellt.

## Patentansprüche

1. LED-Konverter (10) zum Betrieb einer Last aus wenigstens einer LED-Strecke (6) mit wenigstens einer LED, wobei der LED-Konverter (10) eine galvanische Trennung (3) und primärseitig einen mit einer Gleichspannung (V_{bus}) versorgten resonanten Wandler (1) umfasst,
der eine mit zwei wechselseitig getakteten Schaltern (S1,S2) ausgebildete Halbbrücke aufweist, die über einen an ihrem Mittenpunkt angeschlossenen Serien- oder Parallel-Resonanzkreis eine Versorgungsspannung für die LED-Strecke (6) bereitstellt,
wobei der LED-Konverter (10) eine Steuereinheit (2) aufweist, die dazu eingerichtet ist, die Frequenz (f_{sw}) der Taktung der Halbbrücke einzustellen,
wobei die Steuereinheit (2) dazu eingerichtet ist, eine den resonanten Wandler (1) versorgende Gleichspannung (V_{bus}) durch eine Ansteuerung eines Schalters einer PFC-Schaltung (4) des LED-Konverters (10) einzustellen, **dadurch gekennzeichnet, dass**
die Steuereinheit (2) dazu eingerichtet ist,
- beim Einschalten des LED-Konverters (10) die Frequenz (f_{sw}) der Taktung so einzustellen, dass der Frequenz-Arbeitspunkt in einem beidseitig begrenzten vorgegebenen Frequenzkorridor (fₒₚₜ) liegt, und gleichzeitig die den resonanten Wandler (1) versorgende Gleichspannung (V_{bus}) auf eine möglichst geringe Gleichspannung einzustellen, und die den resonanten Wandler (1) versorgende Gleichspannung (V_{bus}) graduell zu erhöhen, bis ein Schwellwert (ref) für eine Rückführgröße erreicht ist, die die durch den resonanten Wandler (1) übertragene Leistung wiedergibt,
- nach Erreichen des Schwellwerts eine Laufzeitsteuerung durchzuführen, bei der zur Regelung der durch den LED-Konverter (10) an die LED-Strecke (6) übertragenen Leistung die Frequenz (f_{sw}) der Taktung in dem Frequenzkorridor (fₒₚₜ) basierend auf der Rückführgröße verändert wird, und
- die Amplitude der den resonanten Wandler (1) versorgenden Gleichspannung (V_{bus}) zu verändern, wenn erkannt wird, dass der sich durch die Regelung ergebende Frequenz-Arbeitspunkt ausserhalb des Frequenzkorridors (fₒₚₜ) liegt.

2. LED-Konverter nach Anspruch 1, wobei die Steuereinheit (2) dazu eingerichtet ist, die den resonanten Wandler (1) versorgende Gleichspannung (Vbᵤₛ) konstant zu halten, wenn der Schwellwert (ref) erreicht wurde.

3. LED-Konverter nach einem der vorgehenden Ansprüche, wobei die Steuereinheit (2) dazu eingerichtet ist, einen Sollwert (Vbᵤₛ *) für die den resonanten Wandler (1) versorgende Gleichspannung (Vbᵤₛ) an die PFC-Schaltung (4) zu übermitteln.

4. LED-Konverter nach einem der vorgehenden Ansprüche, wobei der Serien/Parallel-Resonanzkreis dazu eingerichtet ist, einen Transformator (3) zu versorgen, der an seinem Ausgang sekundärseitig die Versorgungsspannung für die LED-Strecke (6) bereitstellt.

5. LED-Konverter nach Anspruch 4, wobei sekundärseitig, vorzugsweise an einem Ausgang des Transformators (3), eine Diodenschaltung vorgesehen ist, die einen Speicherkondensator (5) speist, der dazu eingerichtet ist, die Versorgungsspannung für die LED-Strecke (6) bereitzustellen.

## Claims

1. An LED converter (10) for operating a load comprising at least one LED series (6) with at least one LED, wherein the LED converter (10) comprises a galvanic separation (3) and on the primary side a resonant converter (1) supplied with a direct current voltage (V_{bus}), which converter has a half-bridge constructed of two reciprocally clocked switches (S1, S2), which half-bridge provides a supply voltage for the LED series (6) through a serial or parallel resonance circuit connected to the midpoint of said bridge, wherein the LED converter (10) has a control unit (2), which is configured to adjust the frequency (f_{sw}) of the clocking of the half bridge,
wherein the control unit (2) is configured to adjust a direct current voltage (V_{bus}) supplying the resonant converter (1) through an actuation of a switch of a PFC circuit (4) of the LED converter (10),
**characterized in that**
the control unit (2) is configured,
- when switching on the LED converter (10) to adjust the frequency (f_{sw}) of the clocking so that the frequency operating point is in a predetermined frequency corridor (fₒₚₜ) delimited on both sides, and at the same time to adjust the direct current voltage (V_{bus}) supplying the resonant converter (1) to an as low as possible direct current voltage, and to gradually increase the direct current voltage (V_{bus}) supplying the resonant converter (1), until a threshold value (ref) for a feedback variable is achieved, which reflects the power transferred by the resonant converter (1),
- after reaching the threshold value a runtime control is carried out, in which the frequency (f_{sw}) of the clocking in the frequency corridor (fₒₚₜ) is varied based on the feedback variable in order to regulate the power transferred by the LED converter (10) to the LED series (6),
and
- to vary the amplitude of the direct current voltage (V_{bus}) supplying the resonant converter (1), if it is detected that the frequency operating point resulting from the regulation is outside the frequency corridor (fₒₚₜ).

2. The LED converter according to Claim 1, wherein the control unit (2) is configured to keep the direct current voltage (V_{bus}) supplying the resonant converter (1) constant, if the threshold value (ref) was achieved.

3. The LED converter according to any one of the preceding claims, wherein the control unit (2) is configured to transmit a target value (V_{bus}*) for the direct current voltage (V_{bus}) supplying the resonant converter (1) to the PFC circuit (4).

4. The LED converter according to any one of the preceding claims, wherein the series/parallel resonant circuit is configured to supply a transformer (3), which provides the supply voltage for the LED series (6) at its output on the secondary side.

5. The LED converter according to Claim 4, wherein on the secondary side, preferably at an output of the transformer (3), a diode circuit is provided, which feeds a storage capacitor (5), which is configured to provide the supply voltage for the LED series (6).

## Revendications

1. Convertisseur à LED (10) pour l'exploitation d'une charge constitué d'au moins une chaîne de LED (6) avec au moins une LED, le convertisseur à LED (10) comprenant une séparation galvanique (3) et, côté primaire, un convertisseur résonnant (1) alimenté avec une tension continue (V_{bus}), qui comprend un demi-pont réalisé avec deux commutateurs (S1, S2) cadencés en alternance, qui génère, par l'intermédiaire d'un circuit de résonance en série ou en parallèle connecté au niveau de son centre, une tension d'alimentation pour la chaîne de LED (6),
le convertisseur à LED (10) comprenant une unité de commande (2) qui est conçue pour ajuster la fréquence (fsw) du cadencement du demi-pont, l'unité de commande (2) étant conçue pour ajuster une tension continue (V_{bus}) alimentant le convertisseur résonnant (1) par un contrôle d'un commutateur d'un circuit PFC (4) du convertisseur à LED (10),
**caractérisé en ce que**
l'unité de commande (2) est conçue
- pour ajuster, lors de l'activation du convertisseur à LED (10), la fréquence (fsw) du cadencement de façon à ce que le point de fonctionnement de la fréquence se trouve dans un corridor de fréquence (fₒₚₜ) prédéterminé limité des deux côtés, et simultanément pour ajuster la tension continue (V_{bus}) alimentant le convertisseur résonnant (1) à la tension continue la plus faible possible, et pour augmenter graduellement la tension continue (V_{bus}) alimentant le convertisseur résonnant (1) jusqu'à ce qu'une valeur seuil (ref) pour une grandeur de retour soit atteinte, qui reproduit la puissance transmise par le convertisseur résonnant (1),
- pour effectuer, une fois la valeur seuil atteinte, un contrôle de temps de fonctionnement, dans lequel, pour la régulation de la puissance transmise par le convertisseur à LED (10) à la chaîne de LED (6), la fréquence (f_{sw}) du cadencement dans le corridor de fréquence (fₒₚₜ) est modifiée sur la base de la grandeur de retour et
- pour modifier l'amplitude de la tension continue (V_{bus}) alimentant le convertisseur résonnant (1) lorsqu'il est détecté que le point de fonctionnement de fréquence résultant de la régulation se trouve hors du corridor de fréquence (fₒₚₜ).

2. Convertisseur à LED selon la revendication 1, l'unité de commande (2) étant conçue pour maintenir constante la tension continue (V_{bus}) alimentant le convertisseur résonnant (1), lorsque la valeur seuil (ref) a été atteinte.

3. Convertisseur à LED selon l'une des revendications précédentes, l'unité de commande (2) étant conçue pour transmettre une valeur de consigne (Vbus*) pour la tension continue (V_{bus}) alimentant le convertisseur résonnant (1) au circuit PFC (4).

4. Convertisseur à LED selon l'une des revendications précédentes, le circuit de résonance série/parallèle étant conçu pour alimenter un transformateur (3) qui génère, au niveau de sa sortie, côté secondaire, la tension d'alimentation pour la chaîne de LED (6).

5. Convertisseur à LED selon la revendication 4, un circuit à diodes étant prévu côté secondaire, de préférence au niveau d'une sortie du transformateur (3), qui alimente un condensateur d'accumulation (5) qui est conçu pour générer la tension d'alimentation pour la chaîne de LED (6).
